# EUROPÄISCHE PATENTSCHRIFT

(11) **EP 3 501 843 B1**
(45) Veröffentlichungstag und Bekanntmachung des Hinweises auf die Patenterteilung: **01.04.2020**
(21) Anmeldenummer: 17208367.7
(22) Anmeldetag: 19.12.2017
(51) Int. Cl.: B60B 1/08, B60B 3/06

(54) **VERFAHREN ZUR HERSTELLUNG VON ALUMINIUMRÄDERN MIT GLANZFLÄCHEN**
METHOD FOR THE PRODUCTION OF ALUMINIUM WHEELS WITH SHINY SURFACES
PROCÉDÉ DE FABRICATION DE ROUES D'ALUMINIUM À SURFACES BRILLANTES

(43) Veröffentlichungstag der Anmeldung: 26.06.2019
(73) Patentinhaber: Borbet Thüringen GmbH, 99947 Bad Langensalza (DE)
(72) Erfinder: HONSEL, Claus-Michael, 59519 Moehnesee (DE); WERNER, Joerg, 99869 Weingarten (DE)
(74) Vertreter: Rausch Wanischeck-Bergmann Brinkmann

(56) Entgegenhaltungen:
- EP-A1- 3 225 335
- EP-A2- 2 145 708
- WO-A1-2011/060934

## Beschreibung

Die vorliegende Erfindung betrifft ein Verfahren zur Herstellung von Rädern aus Aluminiumguss, wobei zum Zwecke der späteren Erzeugung von Glanzflächen durch spanabhebende Verfahren an den als Glanzflächen geplanten Abschnitten ein Aufmaßmaterial ausgebildet wird.

Entsprechende Verfahren sowie nach dem Verfahren hergestellte Räder sind im Stand der Technik bekannt, beispielsweise aus der GB 1 418 627 A oder EP 2 145 708. Bei den bekannten Verfahren werden auf der im bestimmungsgemäßen Einsatzfahrzeug abgewandten Seite des Rades, die im montierten Zustand sichtbar ist, insbesondere zur Verschönerung des ästhetischen Eindrucks Glanzflächen ausgebildet. Diese werden unter anderem durch sogenanntes Glanzdrehen erzeugt. Dabei rotiert der Grundkörper um seine Mittelachse, während Material abgetragen wird. Dies erfolgt im Stand der Technik in der Regel nach dem Lackieren, so dass der Lack wieder durch Drehen abgetragen wird. Darüber hinaus ist es erforderlich, eine entsprechende Materialschicht abzutragen, um den gewünschten Glanz hervor zu arbeiten.

Bereits bei der Gussherstellung entsprechender Räder muss das spätere Glanzdrehen berücksichtigt werden. Am fertigen, lackierten Rad wird das Design überdreht, so dass die Farbe entfernt wird. Die verbleibenden Oberflächen erscheinen wieder aluminiumfarben, der Rest des Rades hat die jeweilige Farbe des Lackes. In der Regel wird das Rad nochmals mit klarsichtigem Lack, Acryl oder dergleichen beschichtet.

In Vorbereitung dieses Verfahrens wird am Rohteil ein Aufmaß belassen, welches im Laufe der Fertigung, zunächst vor und dann nach dem Lackieren, entfernt wird. dies entspricht den Vorgängen des Schruppens und Schlichtens.

Ein Nachteil der bisher bekannten Verfahren ergibt sich aus der Erzeugung des Glanzdrehaufmaßes. Dieses ist in der Regel 1,5 mm stark und stellt eine einfache Fortsetzung der vorgesehenen Flächen dar. Dies sind in der Regel Speichen.

Zur Erzeugung des Glanzdrehaufmaßes wird am Rad ein Radius oder eine Fase fortgesetzt. Durch das Abtragen des Aufmaßes wird die Anbindung des Aufmaßes gegenüber dem eigentlichen Rad zwangsläufig verletzt und um die aufgetragenen/abzutragenden 1,5 mm zu der Radinnenseite, also der im bestimmungsgemäßen Montagezustand dem Fahrzeug zugewandten Seite, reduziert.

Aufgrund der hohen Stückzahlen sind Nachbearbeitungen aufwendig oder gar unmöglich, wie beispielsweise ein manuelles entgraten.

Die aus dem Stand der Technik bekannte Auslegung des Aufmaßes verursacht die Bildung scharfer Kanten, so dass am fertigen Rad je nach Einsatzdauer und den Umgebungsbedingungen eine sogenannte Kantenkorrosion auftritt. Dies bedeutet, dass letztlich die zum Schutz aufgebrachte Acrylschicht an Kanten beziehungsweise Übergängen zwischen der lackierten Radfläche und der glanzgedrehten Radfläche wegen zu geringer Deckung beziehungsweise ungünstigen Haftungsbedingungen durch Witterungseinflüsse unterwandert wird. Dies ist als optischer Mangel solcher Räder bekannt.

Ausgehend vom vorbeschriebenen Stand der Technik liegt der vorliegenden die **Aufgabe** zugrunde, ein Verfahren zur Herstellung eines gattungsgemäßen Rades bereitzustellen, bei welchem das Risiko der Kantenkorrosion am glanzgedrehten Rad vermieden oder zumindest minimiert ist.

Zur technischen **Lösung** dieser Aufgabe wird ein Verfahren mit den Merkmalen des Patentanspruches 1 vorgeschlagen. Weitere Vorteile und Merkmale ergeben sich aus den Unteransprüchen. Ein erfindungsgemäßes Rad ist im Patentanspruch 5 definiert.

Das Aufmaßmaterial wird unter Vermeidung von Radien oder Fasen klarkantig innerhalb der Abschnittsgrenzen ausgebildet.

Klarkantig bedeutet, dass nicht die vorhandenen Konturen des Rades aufmaßbildend weitergeführt werden, sondern das Aufmaßmaterial wie ein zusätzlicher Steg mit einer klaren Kante gegenüber dem eigentlichen Raddesign in der geplanten fertiggestellten Kontur aufgesetzt wird. Dies erfolgt im Guss, exakt schon bei der Fertigung des Unterkerns bzw. eben der Kokille an sich. Die Abschnittsgrenzen bilden gemäß einer bevorzugten Ausführungsform der Erfindung exakt die geplante Glanzfläche aus. Schneidet man das Rad im Bereich des Übergangs von Radmaterial zu Aufmaßmaterial, so hat die Radkontur vorzugsweise an dieser Stelle einen Knick.

Wird gemäß einer bevorzugten Ausführungsform der Erfindung durch Drehen, Fräsen, Zerspanung generell der steg- oder domartig aufgebrachte Aufmaßanteil abgetragen, so gibt es keine scharfen Übergangskanten zur eigentlichen Radkontur, sondern es bilden sich weiche Kanten aus, die keine Bruchkanten darstellen. Mit Bruchkanten wird im Sinne der vorliegenden Erfindung ein scharfkantiger Übergang von der Glanzfläche zur lackierten Fläche bezeichnet, welche Kante einem Lack wenig Haftungsbereich bietet und/oder ein lackieren mittels eines Schutzlackes an dieser Stelle praktisch nicht zulässt.

In erfindungsgemäßer Weise ist ein Rad mit durch spanabhebende Verfahren erzeugter Glanzfläche dadurch gekennzeichnet, dass der Übergang vom Radmaterial zum glanzgedrehten Material bruchkantenfrei ausgebildet ist.

Mit der Erfindung wird ein Verfahren bereitgestellt, welches bereits mittels konstruktiver Gusstechnik ermöglicht, die bei glanzgedrehten Rädern üblicherweise auftretende Kantenkorrosion zu minimieren oder gar zu vermeiden.

Weitere Vorteile und Merkmale der Erfindung ergeben sich aus der folgenden Beschreibung anhand der Figuren. Dabei zeigen:
- Fig. 1: eine Darstellung einer Aufmaßbildung nach dem Stand der Technik;
- Fig. 2: eine entsprechende Darstellung der Aufmaßbildung nach der Erfindung und
- Fig. 3: eine perspektivische Darstellung eines Schnittes im Bereich des Aufmaßmaterials.

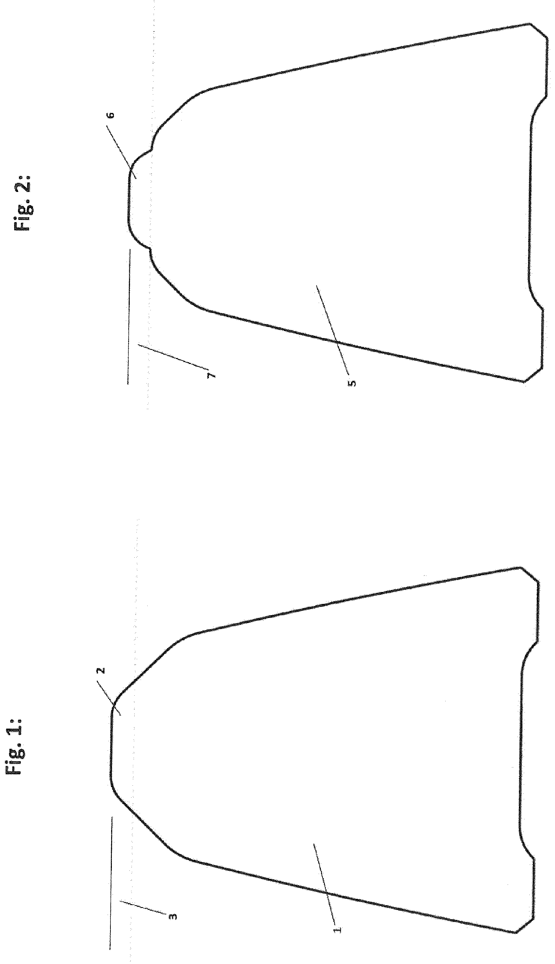

Fig. 1 zeigt die Ausbildung von Aufmaßmaterial 2 auf einem Rad 1 nach dem Stand der Technik. Üblicherweise wird Aufmaßmaterial in einer Dicke 3 von etwa 1,5 mm zusätzlich aufgebracht an den Stellen, die durch Glanzdrehen abgearbeitet werden sollen. Die Anbindung ist gemäß Fig. 1 im Stand der Technik üblicherweise durch Ausbildung einer Fase oder eines Radius. Dies ist unter anderem abhängig vom konstruktiven Spielraum.

Die Anbindung der durch Abtragen des Aufmaßes gebildeten Glanzfläche an die lackierte Fläche wird zwangsläufig scharfkantig. Dieser scharfkantige Übergang, der mit wirtschaftlich vertretbarem Aufwand nicht entfernt werden kann, stellt eine Art Grat oder Schnittkante dar. Bei anschließender Schutzlackierung mittels Acryllack wird an dieser Stelle die Lackhaftung denkbar ungünstig. Dies führt zu den witterungsbedingten Kantenkorrosionen entlang der glanzgedrehten Kanten. Dies ist wirtschaftlich nachteilig.

Fig. 2 zeigt die Vorgehensweise nach der Erfindung. Das Rad 5 hat ein Aufmaßmaterial 6, welches innerhalb der Abschnittsgrenzen, die den späteren glänzenden Bereich umreißen sollen, klarkantig und unter Vermeidung von Radius und Fase einen Steg als Aufmaßmaterial 6 aufgesetzt. Auch dieses hat das Aufmaß 7, welches ebenfalls 1,5 mm sein kann, wobei die Erfindung jedoch ermöglicht, den abzudrehenden Bereich insgesamt dünner auszubilden. Pro Rad mag die Materialeinsparung gering sein, über die großen Massen wird dies bemerkenswert. Es zeigt sich, dass das fertig glanzgedrehte Rad praktisch den Unterkern (aktives Element der Formgebung; Kokillenbestandteil) darstellt, auf welches innerhalb der Abschnittsgrenzen das Glanzdrehaufmaß aufgesetzt ist. Die eigentliche Anbindung wird beim Abdrehen, Fräsen, Zerspanen überhaupt nicht berührt und es kommt hier nicht zu scharfkantigen Gratausbildungen.

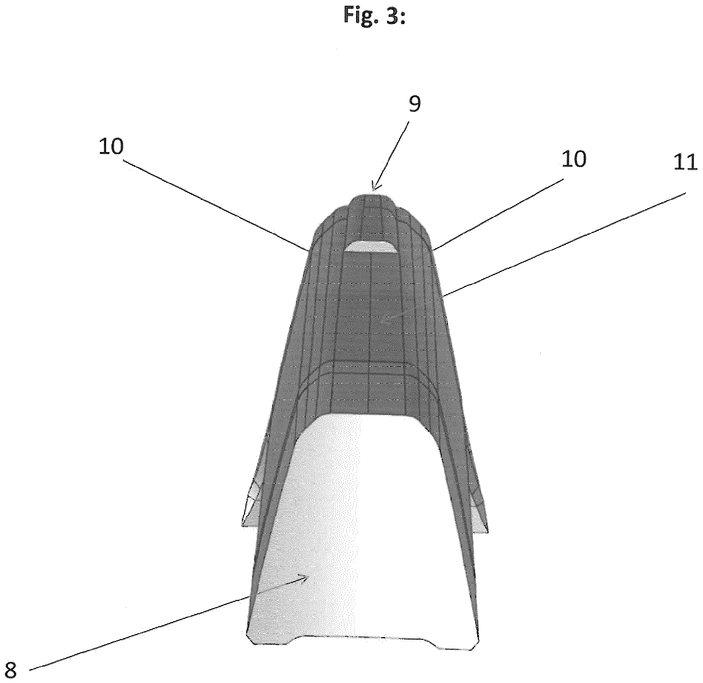

Fig. 3 zeigt das Rad 8 mit dem Aufmaßmaterial 9 innerhalb der klarkantigen Abschnittsgrenzen 10. Es zeigt sich, dass in dem bereits abgedrehten Bereich 11 ein weicher Übergang ausgebildet ist.

Die vorliegende Beschreibung anhand der Beispiele dient nur der Erläuterung und ist nicht beschränkend.

### Bezugszeichen

- 1: Rad
- 2: Aufmaßmaterial
- 3: Dicke
- 4: -
- 5: Rad
- 6: Aufmaßmaterial
- 7: Dicke
- 8: Rad
- 9: Aufmaßmaterial
- 10: Kante
- 11: Übergang

## Patentansprüche

1. Verfahren zur Herstellung von Rädern aus Aluminiumguss, wobei zum Zwecke der späteren Erzeugung von Glanzflächen durch spanabhebende Verfahren an den als Glanzflächen geplanten Abschnitten ein Aufmaßmaterial ausgebildet wird,
**dadurch gekennzeichnet,**
**dass** das Aufmaßmaterial als zusätzlicher Steg mit einer klaren Kante ausschließlich innerhalb der Abschnittsgrenzen ausgebildet wird.

2. Verfahren nach Anspruch 1, **dadurch gekennzeichnet, dass** die Abschnittsgrenzen exakt die geplante Glanzfläche umreißen.

3. Verfahren nach einem der vorhergehenden Ansprüche, **dadurch gekennzeichnet, dass** die Radkontur im Schnitt an einer Berührungs-Kante zwischen Radmaterial und Aufmaßmaterial einen Knick aufweist.

4. Verfahren nach einem der vorhergehenden Ansprüche, **dadurch gekennzeichnet, dass** die Glanzflächen im Drehverfahren durch Abnahme des Aufmaßmaterials erzeugt werden.

5. Rad aus Aluminiumguss, wobei das Rad durch spanabhebende Verfahren erzeugte Glanzflächen aufweist, **dadurch gekennzeichnet, dass** das Rad nach einem Verfahren nach wenigstens einem der Ansprüche 1 bis 4 hergestellt ist, und
der Übergang vom Rad zu den Glanzflächen frei von Bruchkanten ausgebildet ist.

## Claims

1. Method for the production of wheels made of cast aluminum, wherein, for the purpose of the subsequent production of shiny surfaces by machining processes, an oversize material is formed on the sections planned as shiny surfaces,
**characterized in that**
the oversize material is formed as an additional web with a defined edge exclusively within the section boundaries.

2. Method according to claim 1, **characterized in that** the section boundaries exactly outline the planned shiny surface.

3. Method according to one of the preceding claims, **characterized in that** the wheel contour in section has a kink at a contact edge between the wheel material and oversize material.

4. Method according to one of the preceding claims, **characterized in that** the shiny surfaces are produced in a turning process by removing the oversize material.

5. Wheel made of cast aluminum, the wheel having shiny surfaces produced by machining processes, **characterized in that** the wheel is produced using a method according to at least one of claims 1 to 4 and that the transition from the wheel to the shiny surfaces is formed free of break lines.

## Revendications

1. Procédé de fabrication de roues en fonte d'aluminium, dans lequel, pour la production ultérieure de surfaces brillantes par des procédés d'usinage, un matériau surdimensionné est formé sur les sections prévues comme surfaces brillantes,
**caractérisé en ce que**
le matériau surdimensionné est réalisé comme une nervure supplémentaire avec un bord défini exclusivement dans les limites des sections.

2. Procédé selon la revendication 1, **caractérisée en ce que** les limites des sections décrivent exactement la surface brillante prévue.

3. Procédé selon l'une des revendications précédentes, **caractérisé en ce que** le contour de la roue en coupe présente un coude sur une arête de contact entre le matériau de la roue et le matériau surdimensionné.

4. Procédé selon l'une des revendications précédentes, **caractérisée en ce que** les surfaces brillantes sont produites dans un processus de tournage en enlevant le matériau surdimensionné.

5. Roue en fonte d'aluminium, la roue présentant des surfaces brillantes produites par des procédés d'usinage par enlèvement de copeaux, **caractérisée en ce que** la roue est produite par un procédé selon au moins une des revendications 1 à 4 et **en ce que** la transition de la roue aux surfaces brillantes est formée sans ligne de rupture.
